# EUROPÄISCHE PATENTSCHRIFT

(11) **EP 0 526 816 B1**
(45) Veröffentlichungstag und Bekanntmachung des Hinweises auf die Patenterteilung: **04.10.1995**
(21) Anmeldenummer: 92112708.0
(22) Anmeldetag: 24.07.1992
(51) Int. Cl.: F01K 23/10, F03G 6/00

(54) **Gas- und Dampfturbinenkraftwerk mit einem solar beheizten Dampferzeuger**
Power plant with gas and steam turbines with solar steam generator
Centrale à turbines à gaz et à vapeur avec un générateur de vapeur solaire

(30) Priorität: 06.08.1991 DE 4126037
(43) Veröffentlichungstag der Anmeldung: 10.02.1993
(73) Patentinhaber: SIEMENS AKTIENGESELLSCHAFT, 80333 München (DE)
(72) Erfinder: Lezuo, Alex, Dipl.-Ing. (FH), W-8523 Baiersdorf (DE); Rukes, Bert, Dr., W-8520 Erlangen (DE); Traenkenschuh, Hans-Chistian, Dipl.-Ing. (FH), W-8550 Forchheim (DE)

(56) Entgegenhaltungen:
- EP-A- 0 410 111
- WO-A-89/07700
- DE-A- 2 948 306

## Beschreibung

Die Erfindung bezieht sich auf ein Gas- und Dampfturbinenkraftwerk mit einer Hochdruck-, Mitteldruck- und Niederdruckdampfturbine, mit einem an der Abgasleitung der Gasturbine angeschlossenen Abhitzedampferzeuger und mit einer am Dampfturbinenkraftwerk angeschlossenen Anlage zur solaren Dampferzeugung.

Durch die EP-A-0 410 111 ist ein Gas- und Dampfturbinenkraftwerk bekannt geworden, welches mit einer Hochdruck-, Mitteldruck- und Niederdruckdampfturbine ausgestattet ist. Bei diesem Gas- und Dampfturbinenkraftwerk sind alle Heizflachen in einem vom Abgas der Gasturbine durchströmten Abhitzedampferzeuger angeordnet. Ein solches Gas- und Dampfturbinenkraftwerk zeichnet sich durch einen besonders hohen Gesamtwirkungsgrad aus.

Durch die Zeitschrift BWK, Band 41 (1989), Nr. 6, Juni, Seite 288ff, ist es durch den Aufsatz "194 MW Solarstrom mit Rinnenkollektoren" von M. Geyer und H. Klaiß bekannt, bei einem fossil beheizten Dampfturbinenkraftwerk einen solar beheizten Dampferzeuger und Überhitzer an die Speisewasserversorgung des Dampfkraftwerks anzuschließen. Dort wir der solar erzeugte Dampf zusätzlich über einen fossil beheizten Überhitzer aufgeheizt und sodann als Niederdruckdampf in eine separate Dampfturbine eingespeist, während der fossil erzeugte Dampf als Hochdruckdampf einer anderen Dampfturbine zugeleitet wird (vergleiche insbesondere Kreislaufdiagramm Bild 2b auf Seite 291). Es ist eine Eigenart dieser Schaltung, daß im solaren Dampfkreislauf nur Niederdruckdampf erzeugt wird, und daß somit der maximale Wirkungsgrad auf Seiten des solaren Dampfkreislaufs nur mäßig sein kann. Darüber hinaus ergibt sich bei verminderter solarer Heizleistung, dann wenn die Dampfmenge, die der Niederdruckdampfturbine im solaren Kreislauf zur Verfügung gestellt wird, größenordnungsmäßig etwa 40 % der Auslegungsmenge unterschreitet, ein überproportional starker Wirkungsgradverlust im Bereich der Niederdruckdampfturbine. Schwankungen der Heizleistung im Bereich der solaren Dampferzeugung um weit mehr als 50 % kommen jedoch relativ häufig vor.

Durch die obengenannte Druckschrift ist es auf Seite 291 durch das Bild 2c auch bekannt, bei einem fossil beheizten Dampfturbinenkraftwerk mit einer Hochdruck- und Niederdruckdampfturbine einen solar beheizten Dampferzeuger und Überhitzer am Speisewasserkreislauf des Dampfkraftwerks anzuschließen, um mit diesem Hochdruckdampf zu erzeugen. Bei dieser Schaltung sind der solar beheizte Dampferzeuger und der fossil beheizte Dampferzeuger einander parallel geschaltet. Wenngleich bei dieser Kraftwerksschaltung bei voller solarer Leistung ein deutlich besserer Wirkungsgrad der solar zugeführten Heizleistung als bei der eingangs offenbarten Ausführungsform erreicht werden kann, so bleibt doch der Nachteil bestehen, daß bei nachlassender solarer Heizleistung dem fossil erzeugten Hochdruckdampf solar erzeugter Hochdruckdampf geringerer Qualität beigemischt wird. Bei nachlassender solarer Heizleistung läßt sich zwar eine gewisse Kompensation durch starkeres Überhitzen des fossil erzeugten Hochdruckdampfes erreichen. Dieser Kompensation sind jedoch enge Grenzen gesetzt, weil fossil beheizte Dampferzeuger zur Erzielung eines größtmöglichen Wirkungsgrades ohnedies schon mit den materialbedingten höchstzulässigen Temperaturen gefahren werden. Beim Unterschreiten einer minimalen solaren Heizleistung, die bei etwa 70 % der Nennleistung liegt, führt diese Schaltung zwangsweise zu einer nicht mehr kompensierbaren verminderten Dampfqualität sowohl im Hochdruck- als auch im Niederdrucksystem der Dampfturbine, die mit einem deutlichen Wirkungsgradverlust erkauft wird. Darüber hinaus ist die Gefähr einer vorzeitigen Auskondensation des Dampfes in der Turbine bei solchen Betriebszuständen nicht auszuschließen.

Der Erfindung liegt die Aufgabe zugrunde, einen Weg zu weisen, wie bei einem Gas- und Dampfturbinenkraftwerk zusätzlich solare Heizleistung mit größtmöglichem Wirkungsgrad eingekoppelt werden kann, ohne daß sich der Wirkungsgrad des Kraftwerks allzusehr verschlechtert, wenn die solare Heizleistung stark abfällt. Zusätzlich soll unabhängig von der solaren Einstrahlung eine möglichst konstante elektrische Leistung ins Netz eingespeist werden können. Dabei soll aber die Lösung einen Weg weisen, der die Gefahr einer vorzeitigen Auskondensation des Dampfes in der Dampfturbine bei verminderter solarer Heizleistung vermeidet.

Diese Aufgabe wird durch die Merkmale des Anspruchs 1 gelöst. Weitere vorteilhafte Ausgestaltungen der Erfindung sind den Ansprüchen 2 bis 10 zu entnehmen.

Erfindungsgemäß ist die Anlage zur solaren Dampferzeugung an der Speisewasserversorgung des Dampfturbinenkraftwerks angeschlossen und umfaßt mindestens einen Mitteldruckdampferzeuger, dessen Dampfleitung an das Mitteldruckdampfsystem des Dampfturbinenkraftwerks angeschlossen ist. Hierdurch wird dafür gesorgt, daß die Anforderungen an die Dampfqualität des Dampfes der Anlage zur solaren Dampferzeugung hinsichtlich Druck und Temperatur soweit angehoben sind, daß einerseits ein vertretbarer Wirkungsgrad erreicht wird und andererseits die geforderten Werte auch bei mittlerer solarer Heizleistung im wesentlichen ohne zusätzliche Maßnahmen erreicht werden können. Das hat zur Folge, daß der solar erzeugte Dampf bei normaler solarer Heizleistung zusammen mit dem Abdampf der Hochdruckdampfturbine unmittelbar als Mitteldruckdampf genutzt werden kann. Darüber hinaus ist damit auch der Vorteil verbunden, daß bei geringerer solarer Heizleistung, bis hin zum völligen Versiegen derselben, das Gas- und Dampfturbinenkraftwerk über den vom Gasturbinenabgas geheizten Abhitzedampferzeuger mit voller Leistung und unveränderter Dampfqualität weiterbetrieben werden kann.

In weiterer zweckmäßiger Ausgestaltung der Erfindung kann die Dampfleitung der Anlage zur solaren Dampferzeugung an den Eingang des Mitteldruckteils der Dampfturbine angeschlossen sein. Bei Einspeisung von solar erzeugtem Dampf in die Mitteldruckdampfturbine kann die Leistung des Gasturbinenkraftwerks und folglich auch die Menge des im Abhitzedampferzeugers erzeugten Dampfes entsprechend zurückgefahren werden.

In weiterer vorteilhafter Ausgestaltung der Erfindung kann dem Dampfaustritt der Hochdruckdampfturbine eine Rückschlagklappe zugeordnet sein. Dadurch wird eine Rückströmung bei voller solarer Heizleistung und zurückgenommener Gasturbinenleistung in die Hochdruckdampfturbine wirkungsvoll verhindert.

In besonders vorteilhafter Weiterbildung der Erfindung kann die Dampfleitung der Anlage zur solaren Dampferzeugung an den Eingang der der Mitteldruckdampfturbine vorgeschalteten Zwischenüberhitzerheizflächen des Abhitzedampferzeugers angeschlossen sein. Hierdurch wird es möglich, die Qualität des solar erzeugten Dampfes weitgehend unabhängig von Schwankungen der solaren Heizleistung durch zusätzliches Aufheizen im Abhitzedampferzeuger auf einen höheren und relativ konstanten Wert zu bringen.

In besonders zweckmäßiger Weiterbildung der Erfindung können die Zwischenüberhitzerheizflächen des Abhitzedampferzeugers mit mindestens einem Einspritzkühler versehen sein. Durch diese Maßnahme wird erreicht, daß die Zwischenüberhitzerheizflächen ausreichend groß dimensioniert werden können, um bei mäßiger solarer Heizleistung hinreichend überhitzten Mitteldruckdampf liefern zu können. In Zeiten hoher solarer Heizleistung können dann diese Überhitzerheizflächen durch Aktivierung des oder der Zwischenkühler gekühlt und auf diese Weise zusätzlich Mitteldruckdampf erzeugt werden.

Weitere Einzelheiten der Erfindung werden anhand von zwei in den Figuren dargestellten Ausführungsbeispielen erläutert. Es zeigen:
- FIG 1: eine schematische Darstellung eines erfindungsgemäßen Gas- und Dampfturbinenkraftwerks mit einer direkt an der Mitteldruckdampfturbine angeschlossenen Anlage zur solaren Dampferzeugung und
- FIG 2: eine schematische Darstellung eines anderen erfindungsgemäßen Gas- und Dampfturbinenkraftwerks mit einer an den Eingang der Zwischenüberhitzerheizflächen angeschlossenen Anlage zur solaren Dampferzeugung.

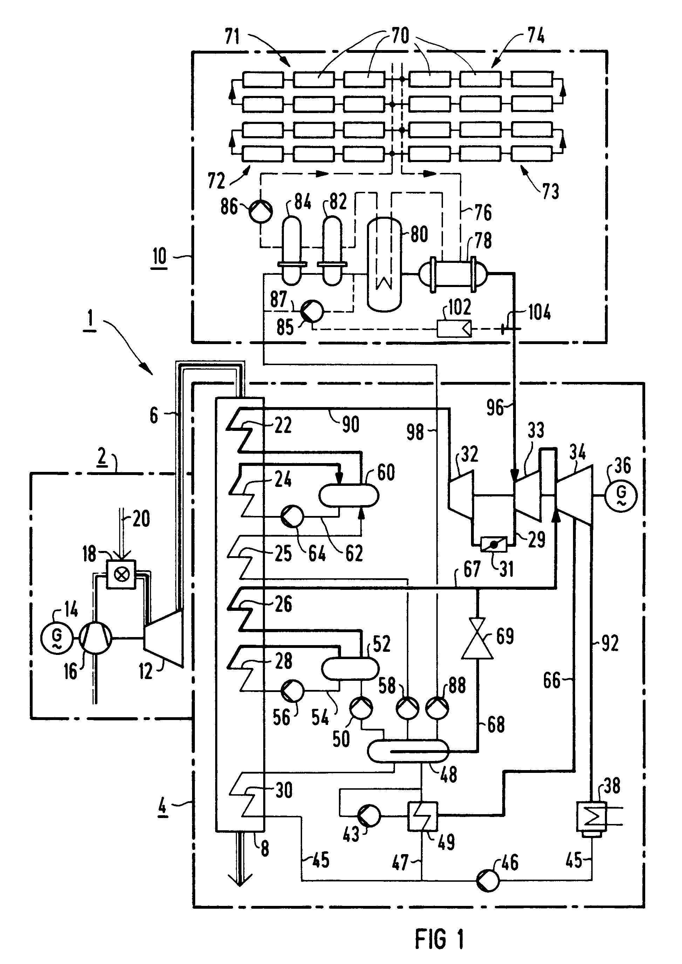

Die Figur 1 zeigt in schematischer Darstellung ein erfindungsgemäßes Gas- und Dampfturbinenkraftwerk 1 bestehend aus einem Gasturbinenkraftwerk 2 sowie einem Dampfturbinenkraftwerk 4, welches einen an der Abgasleitung 6 des Gasturbinenkraftwerks 2 angeschlossenen Abhitzedampferzeuger 8 umfaßt und einer Anordnung 10 zur solaren Dampferzeugung, die an dem Dampfturbinenkraftwerk 4 angeschlossen ist.

Das Gasturbinenkraftwerk 2 besteht aus einer Gasturbine 12, einem von der Gasturbine 12 angetriebenen Generator 14 und Luftverdichter 16 und einer zwischen Luftverdichter und Gasturbine geschalteten Brennkammer 18 mit Brennstoffleitung 20. Die Abgasleitung 6 des Gasturbinenkraftwerks ist an den Abhitzedampferzeuger 8 des Dampfturbinenkraftwerks 4 angeschlossen. Im Abhitzedampferzeuger 8 erkennt man in Strömungsrichtung des Gasturbinenabgases Hochdrucküberhitzerheizflächen 22, Hochdruckverdampferheizflächen 24, Hochdruckspeisewasservorwärmheizflächen 25, Niederdrucküberhitzerheizflächen 26, Niederdruckverdampferheizflächen 28 und Speisewasservorwärmerheizflächen 30.

Das Dampfturbinenkraftwerk 4 enthält eine Hochdruckdampfturbine 32, eine Mitteldruckdampfturbine 33 und eine Niederdruckdampfturbine 34, die beide gemeinsam einen Generator 36 antreiben. Die Niederdruckdampfturbine ist abdampfseitig an einen Kondensator 38 angeschlossen. Letzterem ist sekundärseitig ein hier nicht weiter dargestellter Kühlkreislauf zugeordnet. In der den Kondensator 38 verlassenden Kondensatleitung 45 sind eine Kondensatpumpe 46 in Serie zu den Speisewasservorwärmheizflächen 30 des Abhitzedampferzeugers 8 und einem Speisewasserbehälter 48 geschaltet. An den Speisewasserbehälter 48 ist eine Niederdruckspeisewasserpumpe 50 angeschlossen. Diese versorgt das Wasser-Dampf-Trenngefäß 52 des Niederdruckverdampferkreislaufs 54 mit Speisewasser. Letzterer umfaßt eine am Wasser-Dampf- Trenngefäß 52 angeschlossene und in Serie zu den Niederdruckverdampferheizflächen 28 geschaltete Speisewasserumwälzpumpe 56. Die Niederdruckverdampferheizflächen 28 münden dampfseitig wieder an das Wasser-Dampf-Trenngefäß 52. Wasserseitig sind an dem Wasser-Dampf-Trenngefäß 52 des Niederdruckverdampferkreislaufs 54 außerdem die Niederdrucküberhitzerheizflächen 26 angeschlossen, die ihrerseits an den Eingang der Niederdruckdampfturbine 34 angeschlossen sind.

An den Speisewasserbehälter 48 ist außer der Niederdruckspeisewasserpumpe 50 auch eine Hochdruckspeisewasserpumpe 58 angeschlossen, die ihrerseits das Wasser-Dampf-Trenngefäß des Hochdruckverdampferkreislaufs 62 mit Speisewasser versorgt. Zwischen der Hochdruckspeisewasserpumpe 58 und dem Wasser-Dampf-Trenngefäß 60 sind die Hochdruckvorwärmheizflächen 25 geschaltet. Der Hochdruckverdampferkreislauf 62 umfaßt eine an das Wasser-Dampf-Trenngefäß 60 angeschlossene Speisewasserumwälzpumpe 64 mit hierzu in Serie geschalteten Hochdruckverdampferheizflächen 24, welche dampfseitig wiederum in das Wasser-Dampf-Trenngefäß 60 münden. Dampfseitig ist das Wasser-Dampf-Trenngefäß 60 des Hochdruckverdampferkreislaufs 62 über die Hochdrucküberhitzerheizflächen 22 an den Eingang der Hochdruckdampfturbine 32 angeschlossen. Letztere ist ausgangsseitig über eine Rückschlagarmatur 31 an den Eingang der Mitteldruckdampfturbine 33 angeschlossen ist, die in Serie zur Niederdruckdampfturbine 34 geschaltet ist. Außerdem ist die Niederdruckdampfturbine 34 über eine Anzapfleitung 66 direkt mit einem Wärmetauscher 49 verbunden, der primärseitig in eine parallel zu den Speisewasservorwärmheizflächen 30 geschalteten Zweig 47 der Kondensatleitung 45 eingebaut ist. Der sekundärseitige Ausgang dieses Wärmetauschers ist über eine Wasserpumpe 43 mit dem Speisewasserbehälter 48 verbunden. Außerdem ist die an den Niederdrucküberhitzerheizflächen 26 zur Niederdruckdampfturbine 34 führende Niederdruckdampfleitung 67 mit einer Abzweigung 68 versehen, die über ein Drosselventil 69 in den Speisewasserbehälter 48 führt.

Die Anordnung 10 zur solaren Dampferzeugung umfaßt eine Vielzahl von Solarpanelen 70, vorzugsweise Rinnensolarkollektoren. Diese sind im Ausführungsbeispiel der Figur 1 zu jeweils sechs Stück in Serie geschaltet. Diese Sechsergruppen 71, 72, 73, 74 sind parallel zueinander geschaltet. Die Solarpanele 70 werden von einem im Kreislauf geführten Wärmetransportmedium - vorzugsweise Thermoöl - durchströmt. Dieser Primärkreislauf 76 umfaßt in Strömungsrichtung hintereinandergeschaltet einen Dampfüberhitzer 78, einen Dampferzeuger 80, zwei in Serie geschaltete Vorwärmer 82, 84, eine Primärkreisumwälzpumpe 86 und die parallel geschalteten Sechsergruppen 70, 72, 73, 74 der Solarpanele 70. Die beiden in Serie geschalteten Speisewasservorwärmer 82, 84 sind sekundärseitig über eine Mitteldruckspeisewasserpumpe 88 an den Speisewasserbehälter 48 des Dampfturbinenkraftwerks 4 angeschlossen. Ausgangsseitig sind sie sowohl im Primärkreislauf als auch im Sekundärkreislauf in Serie mit dem Dampferzeuger 80 und dem Dampfüberhitzer 78 geschaltet. Der Dampfüberhitzer 78 ist ausgangsseitig direkt an den Eingang der Mitteldruckdampfturbine 33 angeschlossen. Parallel zu den Speisewasservorwärmern 82, 84 ist eine mit einer Umwälzpumpe 85 versehenen Rezirkulationsleitung 87 geschaltet.

Beim Betrieb dieses Gas- und Dampfturbinenkraftwerks 1 mit einer vorgeschalteten Anordnung 10 zur solaren Dampferzeugung werden der Luftverdichter 16 und der Generator 14 von der Gasturbine 12 angetrieben. Der Luftverdichter drückt die Luft in die der Gasturbine vorgeschaltete Brennkammer 18, in der über die Brennstoffleitung 20 zugeführter Brennstoff, vorzugsweise Erdgas, mit der Verdichterluft verbrannt wird. Die so erzeugten heißen Verbrennungsabgase strömen durch die Gasturbine 12 und über die Gasturbine in die Abgasleitung 6 und in den Abhitzedampferzeuger 8 des Dampfturbinenkraftwerks 4. Im Abhitzedampferzeuger 8 geben die heißen Abgase der Gasturbine 12 ihre fühlbare Wärme an die diversen Heizflächen 22, 24, 25, 26, 28, 30 des Abhitzedampferzeugers 8 ab, bevor sie in hier nicht weiter dargestellter Weise ins Freie entlassen werden.

Zugleich wird vom Speisewasserbehälter 48 des Dampfturbinenkraftwerks Speisewasser über die Niederdruckspeisewasserpumpe 50 in das Wasser-Dampf-Trenngefäß 52 des Niederdruckverdampferkreislaufs 54 gepumpt. Die wasserseitig an das Wasser-Dampf-Trenngefäß des Niederdruckverdampferkreislaufs 54 angeschlossene Speisewasserumwälzpumpe 56 pumpt das Speisewasser durch die Niederdruckverdampferheizflächen 28 und von dort wiederum in das Wasser-Dampf-Trenngefäß 52 des Niederdruckverdampferkreislaufs 54 zurück. Der sich im Wasser-Dampf-Trenngefäß des Niederdruckverdampferkreislaufs 54 ansammelnde Dampf strömt über die Niederdrucküberhitzerheizflächen in die Niederdruckdampfturbine 34.

Außerdem wird beim Betrieb über die Hochdruckspeisewasserpumpe 58 Speisewasser aus dem Speisewasserbehälter 48 über die Hochdruckvorwärmheizflächen 25 in das Wasser-Dampf-Trenngefäß 60 des Hochdruckverdampferkreislaufs 62 gepumpt. Von diesem Wasser- Dampf-Trenngefäß 60 wird wiederum das Speisewasser von der Speisewasserumwälzpumpe 64 durch die Hochdruckverdampferheizflächen 24 und in das Wasser-Dampf-Trenngefäß 60 zurückgepumpt. Der sich im Wasser-Dampf-Trenngefäß ansammelnde Dampf gelangt über die Hochdrucküberhitzerheizflächen 22 in die Hochdruckdampfleitung 90 und in den Eingang der Hochdruckdampfturbine 32. Vom Ausgang der Hochdruckdampfturbine gelangt der Dampf über eine Rückschlagarmatur 31 in den Eingang der Mitteldruckdampfturbine 33 und von dort direkt in die Niederdruckdampfturbine 34. Der Abdampf der Niederdruckdampfturbine gelangt über die Abdampfleitung 92 in den Kondensator 38 und wird dort kondensiert. Das Kondensat wird von der Kondensatpumpe 46 aus dem Kondensator in die Speisewasservorwärmheizflächen 30 des Abhitzedampferzeugers 8 und von dort wiederum vorgewärmt in den Speisewasserbehälter 48 befördert.

An den Speisewasserbehälter 48 des Dampfturbinenkraftwerks 4 ist außerdem die weitere Mitteldruckspeisewasserpumpe 88 angeschlossen, die Speisewasser in die beiden Vorwärmer 82, 84 und von dort in den Dampferzeuger 80 und den Dampfüberhitzer 78 der Anordnung 10 zur solaren Dampferzeugung pumpt. Die beiden Vorwärmer 82, 84, der Dampferzeuger 80 und der Dampfüberhitzer 78 der Anordnung 10 zur solaren Dampferzeugung werden primärseitig von einem über die Umwälzpumpe 86 im Kreislauf gepumpten Wärmetransportmedium - vorzugsweise ein Thermoöl - durchströmt. Dieses wird in den Rinnen der Solarpanele 70 auf ca. 400 °C aufgeheizt und gibt diese seine fühlbare Wärme zunächst in den Dampfüberhitzer 78, sodann in den Verdampfer 80 und schließlich in den beiden Speisewasservorwärmern 82, 84 an das Speisewasser bzw. den Dampf ab. Der den Dampfüberhitzer 78 verlassende Mitteldruckdampf gelangt über die Mitteldruckdampfleitung 90 als zusätzlicher Dampf direkt in den Eingang der Mitteldruckdampfturbine 32. Er ergänzt und/oder substituiert dort den im Abhitzedampferzeuger fossil erzeugten Mitteldruckdampf. Das hat zur Folge, daß die Gasturbinenleistung je nach solarer Heizleistung und Auslegung der Anlage bis auf einen Minimalwert, der bei etwa 40 % der Gasturbinennennleistung liegt, zurückgenommen werden kann.

Weil aber die Kapazität der Speisewasservorwärmheizflächen 30 auf den reinen Gas- und Dampfturbinenbetrieb ausgelegt ist, ist eine zusätzliche Aufheizung von Speisewasser für die Anlage 10 zur solaren Dampferzeugung erforderlich. Dies kann dadurch geschehen, daß über die Anzapfleitung 66 weitgehend entspannter Dampf aus der Niederdruckdampfturbine 34 als Heizmedium in den Wärmetauscher 49 geleitet wird und dort zusätzliches, über den Zweig 47 der Kondensatleitung 45 in den Speisewasserbehälter 48 gepumptes Kondensat aufheizt. Aus dem gleichen Grund kann beim Betrieb der Anlage 10 zur solaren Dampferzeugung auch Niederdruckdampf aus der Niederdruckdampfleitung 67 abgezweigt und über ein Drosselventil 69 und die Abzweigung 68 direkt in den Speisewasserbehälter 48 eingeblasen werden.

Es ist nun aber eine Eigenart jeder solaren Energieerzeugung, daß die jeweils verfügbare solare Energie starken kurz- und langzeitigen Schwankungen unterworfen ist. Dies würde bei einer Anlage zur solaren Dampferzeugung zu entsprechenden kurz- und langfristigen Schwankungen der solar erzeugten Dampfmenge und Dampftemperatur führen. Dabei ist insbesondere die nachlassende Dampftemperatur bzw. Dampfqualität in hohem Maße unerwünscht, weil sie zu Auskondensationen in der Dampfturbine führen kann. Um dies zu verhindern, kann in der Anordnung 10 zur solaren Dampferzeugung eine Rezirkulationsleitung 87 vorgesehen sein, die die Mitteldruckspeisewasserleitung 98 am Ausgang des Speisewasservorwärmers 84 mit der Mitteldruckspeisewasserleitung am Eingang des solaren Speisewasservorwärmers 82 verbindet. In dieser Rezirkulationsleitung 87 befindet sich eine drehzahlgeregelte Umwälzpumpe 85. Die Drehzahl dieser Umwälzpumpe 85 wird von einem Regler 102 geregelt, der seine Steuersignale von einem Temperatursensor 104 an der Mitteldruckdampfleitung 96 der Anlage 10 zur solaren Dampferzeugung empfängt.

Hierdurch wird erreicht, daß bei nachlassender solarer Heizleistung und sich dabei verringernder Dampftemperatur der Regler 102 über den Temperatursensor 104 an der Dampfleitung 96 derart beeinflußt wird, daß die Drehzahl der Umwälzpumpe 88 steigert. Dies hat zur Folge, daß in den beiden Speisewasservorwärmern 82, 84 vermehrt vorgewärmtes Speisewasser, das mit frischem Speisewasser vermischt ist, rezirkuliert. Das führt letztendlich dazu, daß bei nachlassender solarer Heizleistung innerhalb eines gewissen Regelbereichs die Temperatur bzw. Qualität des Dampfes, der dem Dampfturbinenkraftwerk 4 zugeführt wird, auf Kosten der Quantität konstant gehalten werden kann. Die nunmehr verringert angebotene solar erzeugte Dampfmenge kann aber durch gleichzeitiges Höherfahren des Gasturbinenkraftwerks 2 und damit auch der Heizleistung im Abhitzedampferzeuger 8 kompensiert werden. Die Gefahr einer vorzeitigen Auskondensation von Dampf innerhalb der Dampfturbinen wird so weitgehend vermieden. Bei völligem Ausfall der solaren Dampferzeugung kann bei dieser Kraftwerkskonzeption die elektrische Energieerzeugung fossil erfolgen.

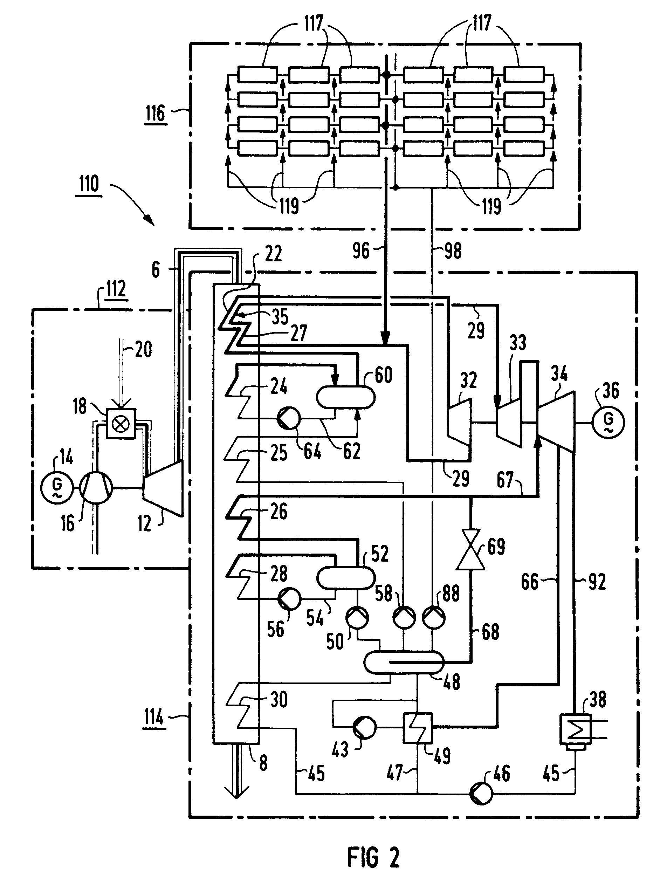

Die Figur 2 zeigt eine andere erfindungsgemäße Variation der Ankopplung eines Gas- und Dampfturbinenkraftwerks an eine Anordnung 116 zur solaren Dampferzeugung. Bei diesem Kraftwerk 110 wird der Aufbau des Gasturbinenkraftwerks 12, bestehend aus einer Gasturbine 12, einem an der Gasturbine angekoppelten Luftverdichter 16 und Generator 14 und einer Brennkammer 18 identisch mit dem Aufbau des Gasturbinenkraftwerks 2 in der Figur 1.

Das Dampfturbinenkraftwerk 114 ist mit Ausnahme zusätzlicher Zwischenüberhitzerheizflächen 27 in gleicher Weise aufgebaut wie das anhand der Figur 1 für das Dampfturbinenkraftwerk der Figur 4 beschrieben worden ist. Insoweit kann auf die Beschreibungsteile zu Figur 1 verwiesen werden. Die zusätzlichen Zwischenüberhitzerheizflächen 27 sind in der Dampfleitung 29 zwischen Hochdruckdampfturbine 32 und Mitteldruckdampfturbine 33 geschaltet. Sie sind im Abhitzedampferzeuger 8 im Bereich der gleichen Rauchgastemperatur, das heißt in der gleichen Ebene, eingebaut wie die Hochdrucküberhitzerheizflächen. Die Zwischenüberhitzerheizflächen 27 dienen der Wiederaufheizung des Abdampfes der Hochdruckdampfturbine 32 vor dessen Einleitung in die Mitteldruckdampfturbine 33.

Die Anordnung 116 zur solaren Dampferzeugung besteht, abweichend vom Ausführungsbeispiel der Figur 1, aus Solarpanelen 117, die direkt vom Speisewasser durchströmt werden. Diese Solarpanele 117 sind nach dem Prinzip der Rinnenkollektoren aufgebaut. Sie sind jedoch so ausgestattet, daß das Speisewasser in ihnen verdampfen und der Dampf auch überhitzt werden kann. In hier nicht weiter dargestellter Weise sind diese Panele mit Einrichtungen 119 und zusätzlichem Eindüsen von Speisewasser ausgerüstet, die es ihnen ermöglichen, sich an unterschiedliche solare Heizleistung anzupassen. Schließlich ist das Rohrsystem dieser Solarpanele 117 an den Speisewasser- bzw. Dampfdruck angepaßt. Die Solarpanele 117 sind daher direkt über die Mitteldruckspeisewasserpumpe 88 und Mitteldruckspeisewasserleitung 98 an den Speisewasserbehälter 48 des Dampfturbinenkraftwerks 114 angeschlossen.

Abweichend vom Ausführungsbeispiel der Figur 1 mündet jedoch die Mitteldruckdampfleitung 96 der Anlage 116 zur solaren Dampferzeugung nicht unmittelbar in die Mitteldruckdampfturbine 33, sondern in die Abdampfleitung 29 der Hochdruckdampfturbine 32, die an die Zwischenüberhitzerheizflächen 27 angeschlossen sind. Durch diese zusätzliche Maßnahme wird erreicht, daß sowohl kurzfristige Schwankungen als auch längerfristiges Abnehmen der Dampfqualität der Anordnung 116 zur solaren Dampferzeugung in den Zwischenüberhitzerheizflächen 27 ausgeglichen bzw. geglättet werden können. Dabei wirkt sich nicht nur die Vermischung mit dem fossil erzeugten Dampf, sondern vor allem die vermehrte Wärmeaufnahme der Zwischenüberhitzerheizflächen 27 im Rauchgasstrom bei sinkender Rohrtemperatur aus.

Beim Betrieb dieses erfindungsgemäßen Kraftwerks 110 werden bei nachlassender solarer Heizleistung die den Solarpanelen 17 zugeordneten, hier nicht weiter dargestellten Einrichtung 119 zum Eindüsen von Speisewasser, weniger stark mit Speisewasser beaufschlagt. Auch hierdurch kann die Dampfqualität bei nachlassender solarer Heizleistung in einem vorgegebenen Regelbereich auf Kosten der Quantität konstant gehalten werden. Darüber hinaus führt eine weiter nachlassende solare Heizleistung auch zu einer merklichen Absenkung der Dampftemperatur in der Mitteldruckdampfleitung 96. Diese Absenkung der Dampftemperatur in der Mitteldruckdampfleitung 96 wird infolge des vor den Zwischenüberhitzerheizflächen 27 zugemischten Abdampfes der Hochdruckdampfturbine 32 teilweise ausgeglichen. Verstärkt ausgleichend wirkt sich jedoch der bei steigender Temperaturdifferenz zwischen Rauchgas und Dampf vermehrte Wärmeübergang in den Zwischenüberhitzerheizflächen 27 aus. Die Zwischenüberhitzerheizflächen sind so dimensioniert, daß ihre Heizleistung an den Betrieb mit mittlerer solarer Heizleistung angepaßt ist. Bei voller solarer Heizleistung kann daher an den Zwischenüberhitzerheizflächen angeschlossene Einspritzkühler 35 aktiviert werden. Durch sie kann auch bei diesem Betriebszustand die Dampfqualität zugunsten einer größeren Dampfmenge konstant gehalten werden. Auch dieses Kraftwerk 110 kann bei völligem Ausfall der solaren Dampferzeugung die elektrische Nennleistung auch als rein fossil betriebenes Gas- und Dampfturbinenkraftwerk erbringen.

Die unterschiedlichen Anlagen zur solaren Dampferzeugung gemäß den Ausführungsbeispielen der Figuren 1 und 2 könnten auch gegeneinander ausgetauscht werden.

## Patentansprüche

1. Gas- und Dampfturbinenkraftwerk (1, 110) mit einer Hochdruck- (32), Mitteldruck- (33) und Niederdruckdampfturbine (34) und mit einem an der Abgasleitung (6) der Gasturbine (12) angeschlossenen Abhitzedampferzeuger (8),
**dadurch gekennzeichnet,** daß an der Speisewasserversorgung (48) des Dampfturbinenkraftwerks (4, 114) eine Anlage (10, 116) zur solaren Dampferzeugung angeschlossen ist, die mindestens einen Mitteldruckdampferzeuger (80, 117) umfaßt, dessen Dampfleitung (96) an das Mitteldruckdampfsystem des Dampfturbinenkraftwerks angeschlossen ist.

2. Gas- und Dampfturbinenkraftwerk nach Anspruch 1,
**dadurch gekennzeichnet,** daß die Dampfleitung (96) der Anlage (10) zur solaren Dampferzeugung an den Eingang des Mitteldruckteils (33) der Dampfturbine angeschlossen ist.

3. Gas- und Dampfturbinenkraftwerk nach Anspruch 1 oder 2,
**dadurch gekennzeichnet,** daß dem Dampfaustritt der Hochdruckdampfturbine (32) eine Rückschlagklappe (31) zugeordnet ist.

4. Gas- und Dampfturbinenkraftwerk nach Anspruch 1,
**dadurch gekennzeichnet,** daß die Dampfleitung (96) der Anlage (116) zur solaren Dampferzeugung an den Eingang der der Mitteldruckdampfturbine (33) vorgeschalteten Zwischenüberhitzerheizflächen (27) des Abhitzedampferzeugers (8) angeschlossen ist.

5. Gas- und Dampfturbinenkraftwerk nach Anspruch 4,
**dadurch gekennzeichnet,** daß die Zwischenüberhitzerheizflächen (27) mit mindestens einem Einspritzkühler (35) versehen sind.

6. Gas- und Dampfturbinenkraftwerk nach einem der Ansprüche 1 bis 5, **dadurch gekennzeichnet,** daß die Solarpanele (117) der Anlage (116) zur solaren Dampferzeugung direkt an die Speisewasserleitung (98) des Dampfturbinenkraftwerks (114) angeschlossen sind.

7. Gas- und Dampfturbinenkraftwerk nach einem der Ansprüche 1 bis 5, **dadurch gekennzeichnet,** daß die Solarpanele (70) der Anlage (10) zur solaren Dampferzeugung an einer von einem separaten Wärmetransportmittel durchströmten Kreislaufleitung (76) angeschlossen und dabei in Serie zu mindestens einem Wärmetauscher (78, 80, 82, 84) geschaltet sind, der sekundärseitig an eine Speisewasserleitung (98) des Dampfturbinenkraftwerks (4) angeschlossen ist.

8. Gas- und Dampfturbinenkraftwerk nach einem der Ansprüche 1 bis 7, **dadurch gekennzeichnet,** daß ein vom Anzapfdampf der Niederdruckdampfturbine (34) heizbarer Wärmetauscher (49) in einen parallel zu den Speisewasservorwärmheizflächen (30) des Abhitzedampferzeugers (8) geschalteten Zweig (47) der Kondensatleitung (45) eingebaut ist.

9. Gas- und Dampfturbinenkraftwerk nach einem der Ansprüche 1 bis 8, **dadurch gekennzeichnet,** daß die Speisewasserleitung zum Wasser-Dampf-Trenngefäß (60) des Hochdruckverdampferkreislaufs (62) über separate Vorwärmheizflächen (25) geführt ist, die im Abhitzedampferzeuger (8), in Strömungsrichtung der Rauchgase, unmittelbar nach den Verdampferheizflächen (24) des Hochdruckverdampferkreislaufs angeordnet sind.

10. Gas- und Dampfturbinenkraftwerk nach einem der Ansprüche 1 bis 9,
**dadurch gekennzeichnet,** daß der Speisewasserbehälter (48) mit Niederdruckdampf heizbar ist.

## Claims

1. Gas and steam turbine power station (1, 110) having a high-pressure steam turbine (32), a medium-pressure steam turbine (33) and a low-pressure steam turbine (34), having a waste heat steam generator (8) which is connected to the waste gas line (6) of the gas turbine (12), characterised in that connected to the feed water supply (48) of the steam turbine power station (4, 114) there is an installation (10, 116) for solar steam generation, which installation comprises at least one medium-pressure steam generator (80, 117), the steam line (96) of which is connected to the medium-pressure steam system of the steam turbine power station.

2. Gas and steam turbine power station according to claim 1, characterised in that the steam line (96) of the installation (10) for solar steam generation is connected to the input of the medium-pressure part (33) of the steam turbine.

3. Gas and steam turbine power station according to claim 1 or 2, characterised in that a non-return valve (31) is associated with the steam outlet of the high-pressure steam turbine (32).

4. Gas and steam turbine power station according to claim 1, characterised in that the steam line (96) of the installation (116) for solar steam generation is connected to the input of the intermediate superheater surfaces (27) of the waste heat steam generator (8) that are connected upstream of the medium-pressure steam turbine (33).

5. Gas and steam turbine power station according to claim 4, characterised in that the intermediate superheater surfaces (27) are provided with at least one injection cooler (35).

6. Gas and steam turbine power station according to one of the claims 1 to 5, characterised in that the solar panels (117) of the installation (116) for solar steam generation are connected directly to the feed water line (98) of the steam turbine power station (114).

7. Gas and steam turbine power station according to one of the claims 1 to 5, characterised in that the solar panels (70) of the installation (10) for solar steam generation are connected to a circulatory line (76), through which a separate heat-transfer medium flows, and are thereby connected in series with at least one heat exchanger (78, 80, 82, 84) which on the secondary side is connected to a feed water line (98) of the steam turbine power station (4).

8. Gas and steam turbine power station according to one of the claims 1 to 7, characterised in that a heat exchanger (49) which can be heated by the extracted steam of the low-pressure steam turbine (34) is installed into a branch (47) of the condensate line (45), which branch (47) is connected in parallel with the feed water preheating surfaces (30) of the waste heat steam generator (8).

9. Gas and steam turbine power station according to one of the claims 1 to 8, characterised in that the feed water line to the water-steam-separating vessel (60) of the high-pressure evaporator circuit (62) is guided via separate preheating surfaces (25) which are arranged in the waste heat steam generator (8), in the direction of flow of the flue gases, directly downstream of the evaporator heating surfaces (24) of the high-pressure evaporator circuit.

10. Gas and steam turbine power station according to one of the claims 1 to 9, characterised in that the feed water container (48) can be heated with low-pressure steam.

## Revendications

1. Centrale électrique à turbines à gaz et à vapeur (1,110) possédant une turbine à haute pression (32), une turbine à moyenne pression (33) et une turbine à basse pression (34), et un générateur de vapeur à récupération de chaleur (8), qui est raccordé à la conduite des gaz d'échappement (6) de la turbine à gaz (12),
caractérisée par le fait qu'au système d'amenée d'eau d'alimentation (48) de la centrale à turbine à vapeur (114) est raccordée une installation (10,110) servant à réaliser une production solaire de vapeur, qui comprend un générateur de vapeur à moyenne pression (80,117), dont la canalisation de vapeur (96) est raccordée au système de vapeur à moyenne pression de la centrale à turbine à vapeur.

2. Centrale électrique à turbines à gaz et à vapeur suivant la revendication 1, caractérisée par le fait que la canalisation de vapeur (96) de l'installation (10) servant à réaliser une production solaire de vapeur est raccordée à l'entrée de la partie à moyenne pression (33) de la turbine à vapeur.

3. Centrale électrique à turbines à gaz et à vapeur suivant la revendication 1 ou 2, caractérisée par le fait qu'un clapet antiretour (31) est associé à la sortie de vapeur de la turbine à vapeur à haute pression (32).

4. Centrale électrique à turbines à gaz et à vapeur suivant la revendication 1, caractérisée par le fait que la canalisation de vapeur (96) de l'installation (116) utilisée pour une production solaire de vapeur est raccordée à l'entrée des surfaces de chauffe (27) d'un surchauffeur intermédiaire disposées en amont de la turbine à vapeur à moyenne pression (33), du générateur de vapeur à récupération de chaleur (8).

5. Centrale électrique à turbines à gaz et à vapeur suivant la revendication 4, caractérisée par le fait que les surfaces de chauffe (27) du surchauffeur intermédiaire sont équipées au moins d'un refroidisseur à injection (35).

6. Centrale électrique à turbines à gaz et à vapeur suivant l'une des revendications 1 à 5, caractérisée par le fait que les panneaux solaires (117) de l'installation (116) servant à réaliser une production solaire de vapeur sont raccordés directement à la canalisation d'amenée d'eau d'alimentation (98) de la centrale à turbine à vapeur (114).

7. Centrale électrique à turbines à gaz et à vapeur suivant l'une des revendications 1 à 5, caractérisée par le fait que les panneaux solaires (70) de l'installation (10) servant à réaliser une production solaire de vapeur sont raccordés à une canalisation en circuit (76) parcourue par un fluide caloporteur séparé, et sont branchés en série avec au moins un échangeur de chaleur (78,80,82,84), qui est raccordé, côté secondaire, à une canalisation d'eau d'alimentation (98) de la centrale à turbine à vapeur (4).

8. Centrale électrique à turbines à gaz et à vapeur suivant l'une des revendications 1 à 7, caractérisée par le fait qu'un échangeur de chaleur (49), qui peut être chauffé par la vapeur de soutirage de la turbine à vapeur à basse pression (34) est monté dans une branche (47) de la canalisation à condensat (45), qui est branchée en parallèle avec les surfaces (30) de réchauffage de l'eau d'alimentation du générateur de vapeur à récupération de chaleur (8).

9. Centrale électrique à turbines à gaz et à vapeur suivant l'une des revendications 1 à 8, caractérisée par le fait que la canalisation d'eau d'alimentation est raccordée au récipient de séparation eau-vapeur (69) du circuit d'évaporateur à haute pression (62) par l'intermédiaire de surfaces séparées de réchauffage (25), qui sont disposées dans le générateur de vapeur à récupération de chaleur (8), directement en aval des surfaces de chauffe (24) du circuit de l'évaporateur à haute pression, dans la direction de circulation des gaz de fumée.

10. Centrale électrique à turbines à gaz et à vapeur suivant l'une des revendications 1 à 9, caractérisée par le fait que le récipient d'eau d'alimentation (48) peut être chauffé avec une vapeur basse pression.
